# EUROPÄISCHE PATENTSCHRIFT

(11) **EP 1 628 923 B1**
(45) Veröffentlichungstag und Bekanntmachung des Hinweises auf die Patenterteilung: **18.07.2007**
(21) Anmeldenummer: 04733316.6
(22) Anmeldetag: 17.05.2004
(51) Int. Cl.: C03B 33/10, C23C 14/06, C23C 16/30, C23C 28/04

(54) **GLASSCHNEIDERÄDCHEN**
SMALL GLASS CUTTER WHEEL
ROULETTE DE COUPE-VERRE

(30) Priorität: 16.05.2003 DE 10322292
(43) Veröffentlichungstag der Anmeldung: 01.03.2006
(73) Patentinhaber: HEGLA Fahrzeug- u. Maschinenbau GmbH & Co. KG, D-37688 Beverungen (DE)
(72) Erfinder: HÖTGER, Bernhard, 37697 Lauenförde (DE); KLIMEK, Klaus Stefan, Bienroder Weg 53 (DE); VOLLBRACHT, Manfred, 37688 Beverungen (DE); RÜSCHOFF, Gerhard, 37671 Höxter (DE)
(74) Vertreter: Solf, Alexander
(86) Internationale Anmeldenummer: PCT/EP2004/005296
(87) Internationale Veröffentlichungsnummer: WO 2004/101455

(56) Entgegenhaltungen:
- DE-A- 10 222 347
- GB-A- 1 366 640
- US-A1- 2002 051 852
- US-A1- 2002 086 147
- PATENT ABSTRACTS OF JAPAN Bd. 1998, Nr. 08, 30. Juni 1998 (1998-06-30) -& JP 10 072224 A (DISCO ABRASIVE SYST LTD), 17. März 1998 (1998-03-17)
- PATENT ABSTRACTS OF JAPAN Bd. 0051, Nr. 44 (C-071), 11. September 1981 (1981-09-11) -& JP 56 078439 A (SHARP CORP), 27. Juni 1981 (1981-06-27)
- "Fine and ultrafine hardmetals carve niche" METAL POWDER REPORT, MPR PUBLISHING SERVICES, SHREWSBURY, GB, Bd. 52, Nr. 4, April 1997 (1997-04), Seiten 16,18-22, XP004287437 ISSN: 0026-0657

## Beschreibung

Die Erfindung betrifft ein Glasschneiderädchen aus gesintertem Hartmetall, insbesondere zur Verwendung in einem Schneidkopf einer Glasschneidemaschine. Die Erfindung betrifft zudem ein Verfahren zur Herstellung des Glasschneiderädchens.

Glasschneiderädchen aus gesintertem Hartmetall, z. B. aus Wolframcarbid, sind ringförmig und weisen eine zentrale Bohrung sowie Seitenflächen außerhalb neben der Bohrung und eine umlaufende Schneide mit sich von den Seitenflächen keilförmig zu einer Schneidenkante hin erstreckenden Schneidenflächen beziehungsweise Schneidenflanken auf. Die Dicke der Schneiderädchen, der Durchmesser der Bohrung und der Keilwinkel der Schneide sind auf die jeweilige Verwendung des Schneiderädchens abgestimmt.

Wesentlich für hohe Schneidqualität ist die Konzentrizität zwischen dem Innen- und Außendurchmesser des Ringes des Glasschneiderädchens. Dies wird z. B. durch Feinstschleifen der Bohrung erreicht. Zudem kann Rauheit der Oberfläche des Schneiderädchens die Schneidqualität beeinträchtigen; deshalb werden qualitativ hochwertige Schneiderädchen an den Seitenflächen und gegebenenfalls auch an den Schneidenflächen geschliffen, wobei der Grad der Rauhtiefe auf die zu erwartende Beanspruchung abgestellt wird. Bei einem derartigen Schleifen wird in der Regel eine Rauhtiefe von 1,0 µm erreicht. Der Feinstschliff der Bohrung kann dagegen Rauhtiefen unter 1,0 µm erhalten.

Trotz der bereits hohen Härte des Werkstoffs des Schneiderädchens führt deren Beanspruchung beim Scheiden von Glas, insbesondere im Schneidenbereich, zu relativ schnellem Verschleiß, woraus eine drastische Minderung der Schneidqualität resultiert. Das Glasschneiderädchen muss frühzeitig ausgetauscht werden, will man unnötigen Glasbruch oder unbrauchbare Brechkanten des Glases vermeiden. Der Austausch verursacht Stillstand der Glasschneidemaschine und nicht unerhebliche Umrüstzeiten.

JP-A-10-72 224 offenbart ein Glasschneiderädchen aus gesintertem Wolframkarbid, dessen Schneidkante mit diamantähnlichem Kohlenstoff (DLC) überzogen ist. Die DLC-Schicht wird durch plasmaunterstützte chemichal Abscheidung (PACVD) erzeugt und ist ca. 2 µm dick.

Ein besonderer Nachteil der bekannten Glasschneiderädchen ist werkstoffbedingt. Trotz der Härte des Werkstoffs kann ein Schneiderädchen bestimmter Raumform, z. B. bezüglich Ringdicke, Schneidenwinkel, Schliff- bzw. Polierrauhigkeit generell nicht universell zum Schneiden vieler unterschiedlicher Glassorten oder Glasdicken eingesetzt werden. Es müssen vielmehr sehr viele unterschiedliche Schneiderädchentypen mit z. B. unterschiedlichen Raumformen, Durchmessern und Dicken vorgehalten werden, die jeweils für die Verwendung für bestimmte Glassorten, wie Floatglas, Verbundssicherheitsglas, beschichtetes Glas oder dergleichen, raumformmäßig konzipiert sind. Das Auswechseln von Schneiderädchen beim Wechsel der Glassorte verursacht den gleichen Aufwand wie das Auswechseln aufgrund des Verschleißes.

Aufgabe der Erfindung ist, ein Glasschneiderädchen zu schaffen, das bei vorgegebener identischer Raumform universeller bezüglich unterschiedlicher Glassorten verwendbar ist sowie erheblich höhere Standzeiten gewährleistet bzw. erheblich geringeren Verschleiß beim Schneiden erfährt und zudem eine deutlich bessere Brechkantenqualität erzeugt.

Diese Aufgabe wird durch die Merkmale des Anspruchs 1 und des Anspruchs 32 gelöst. Vorteilhafte Weiterbildungen der Erfindung werden in den von diesen Ansprüchen abhängigen Ansprüchen 2 bis 30 bzw. 33 bis 55 gekennzeichnet. Eine erfindungsgemäße Verwendung wird in Anspruch 31 definiert.

Die Erfindung sieht vor, dass das Glasschneiderädchen zumindest auf der Schneidenoberfläche mit sogenannten nanostrukturierten Hartwerkstoffen mittels Dünnschichtverfahren beschichtet ist. Hierunter versteht man Werkstoffe, deren charakteristische Strukturen in der Größenordnung von einigen Nanometern, im allgemeinen bei 1 nm bis 10 nm liegen. Verwendbar für die Zwecke der Erfindung sind das Verfahren physikalischer Dampfabscheidung (PVD - "Physical Vapour Deposition") und das plasmagestützte CVD-Verfahren (PACVD - "Plasma Assisted Chemical Vapour Deposition"), die bei relativ niedrigen Temperaturen durchgeführt werden.

Die Beschichtungstechnik für Metallwerkzeuge mittels PVD- und PACVD-Verfahren ist bekannt.

Beispielsweise wird über diese Verfahren, insbesondere über das PACVD-Verfahren in K.-T.Rei, A. Gebauer, J. Wöhle, Vakuum in der Praxis Nr. 4 (1994), S. 259 - 265 berichtet, wobei Einzelschicht- und Mehrschichtverfahren erwähnt werden.

In der WO 00/56946A1 werden Einzelschicht-, Einzelschichtmehrkomponenten- und Gradientenschichtbeschich-tungen von Metallwerkzeugen beschrieben. U. a. wird eine Ti-B-N-Gradientenschichtbeschichtung mit einer substratseitigen TiN-Beschichtung angegeben, wobei die Ti-Konzentration nach außen hin abnimmt und die B-Konzentration und gegebenenfalls auch die N-Konzentration zunimmt.

Aus der DE-OS 1959690 ist bekannt, die Oberfläche von zu beschichtenden Hartmetallteilen für die spanende und spanlose Formgebung durch Schleifen, Bürsten oder Scheuern von der Sinterhaut zu befreien.

Glasschneiderädchen sind bekanntlich Werkzeuge mit geringen Abmessungen, z. B. mit Durchmessern von 3 - 12 mm und Dicken von 1 - 4 mm. Im Rahmen der Aufgabenstellung der vorliegenden Erfindung hat sich herausgestellt, dass eine Dünnschichtbeschichtung sowohl ungeschliffener als auch in üblicher Weise geschliffener bzw. polierter auf dem Markt befindlicher Glasschneiderädchen die Schneidqualität drastische verschlechtert, zu unbrauchbaren Brechkanten und zu erheblich höherem Glasbruch führt. Diese Tatsache ist wohl auch der Grund dafür, dass, obwohl die Dünnschichtbeschichtungsverfahren seit langem z. b. zumindest seit 1971 (DE-OS 1959690) bekannt sind, dünnschichtbeschichtete Glasschneiderädchen nicht auf dem Markt sind.

Die vorliegende. Erfindung hat nun einen verblüffend einfachen Weg gefunden, dünnschichtbeschichtete Glasschneiderädchen herzustellen, die eine sprunghafte Qualitätssteigerung beinhalten, indem sie universeller einsetzbar sind und sehr viel bessere Brechkantenqualitäten erzeugen, wobei zudem der Verschleiß der Glasschneiderädchen erheblich vermindert ist.

Die Erfindung hat herausgefunden, dass es nicht auf die Rauhtiefe von Schleif- oder Polierrillen, sondern auf die Breite der Rillen ankommt und dass die Dünnschichtbeschichtung nur dann wirksam ist, wenn sie auf eine polierte oder feinstgeschliffene Schneide, die aus der Schneidenkante und Schneidenflanken gebildet wird, aufgebracht wird. Dabei konnte in überraschender Weise gefunden werden, dass ein brauchbares positives Ergebnis erst dann erzielt werden kann, wenn die Rillenbreite der Schleifrillen bzw. der Polierrillen im Mittelwert auf unter 1,0 µm reduziert wird. Vorzugsweise wird die Rillenbreite im Mittel unter 0,5 µm und insbesondere zwischen 0,3 µm und 0,1 µm reduziert. Derartige Rillenbreiten führen mit einer PVD- oder PACVD-Dünnstrukturbeschichtung zu den gewünschten Eigenschaften. Unbeschichtete Glasschneiderädchen gleicher Rillenbreiten führen dagegen nicht zu bemerkenswerten Schnittqualitätsverbesserungen.

Nach einer besonderen Ausführungsform der Erfindung wird die Erzeugung der polierten Schneide mit den erfindungsgemäß geringeren Rillenbreiten vor dem Beschichten dadurch erzeugt, dass mit dem unbeschichteten Schneiderädchen Glas, insbesondere in einer Glasschneidemaschine geschnitten wird, bis die Oberfläche der Schneide bezüglich der Rillenbreiten optimal vorbehandelt ist. Wie lange und mit welcher Glassorte sowie mit welcher Druckbelastung und welcher Fahrgeschwindigkeit dieses vorläufige Glasschneiden bzw. Einlaufen durchzuführen ist, ist auf einfache Weise empirisch zu ermitteln.

Bei dieser Art des Polierens unter relativ hohem Druck in einer Glasschneidemaschine werden offenbar die Rillenkanten etwas abgerundet und entgratet und zudem über die Oberfläche überstehende Grate und Erhebungen abgeplattet bis eingeebnet. Eine solche Oberfläche ist besonders gut präpariert für den Auftrag einer dünnen Hartwerkstoffschicht mit den erfindungsgemäß ausgewählten Verfahren.

Zweckmäßigerweise liegen die auf das Glasschneiderädchen ausgeübten Belastungskräfte beim vorläufigen Einlaufen zwischen 10 kg und 30 kg, vorzugsweise zwischen 15 kg und 25 kg.

Sofern das Polieren zum Vorbereiten der Schneidenflanken für den Dünnschichtauftrag nicht durch Glasschneiden erfolgt, ist es vorteilhaft, Polierverfahren anzuwenden, die mit gleichhohen Drucken bzw. Belastungen betrieben werden können.

Der Fachmann kennt Verfahren und Vorrichtungen zur Ermittlung des Mittelwerts der Rauhtiefe von Rillen. Gebräuchlich sind mechanische und optische Tastverfahren sowie Bildauswerteverfahren mikroskopischer Aufnahmen, z. B. die Auswertung von rasterelektronenmikroskopischen Aufnahmen (REM-Aufnahmen).

Am einfachsten gelingt die Feststellung ausreichend geringer Rillenbreiten für die Zwecke der Erfindung mittels optischer Vergleichsverfahren mit Breitennormalien vorbestimmter Oberflächen von Schneiden von Glasschneiderädchen, die nach empirischen Ermittlungen optimierte Eigenschaften gewährleisten.

Bild 1 zeigt eine polierte Schneide eines auf dem Markt befindlichen unbeschichteten Glasschneiderädchens und Bild 2 die Schneide eines erfindungsgemäß durch Einlaufen vorbehandelten unbeschichteten Glasschneiderädchens. Die Bilder 1 und 2 stellen REM-Aufnahmen mit 3000facher Vergrößerung dar. Bild 1 lässt deutlich mehr und breitere, im Bild diagonal verlaufende Rillen, und dunkle Fehlstellen im Vergleich zum Bild 2 erkennen.

Im Bild 2 wird mit Pfeilen 1, 2 und 3 auf Rillen jeweils gleicher Breite gezeigt, die zur Auswertung der Rillenbreite und Ermitteln eines Mittelwerts der Rillenbreiten verwendbar sind.

Die Verwendung der unbeschichteten Rädchen gemäß den Bildern 1 und 2 führt zu vergleichbaren Schnittqualitäten, obwohl das Rädchen nach Bild 2 deutlich geringere Rauhheiten aufweist. Erst die Beschichtung mit einem Hartmetallwerkstoff, aufgebracht nach einem PVD- oder PACVD-Verfahren erbringt die Lösung der aufgezeigten Probleme.

Nach einer Ausführungsform der Erfindung wird mittels PACVD-Verfahren zumindest auf die Schneide des Glasschneiderädchens ein Schichtsystem einer Hartstoffschicht eines Übergangsmetalls, insbesondere der IV.- und V.-Gruppe des Periodensystems aufgebracht. Vorzugsweise werden Beschichtungen einer Dicke von 1 µm - 4 µm, insbesondere von 1,5 µm bis 3 µm erzeugt. Dabei sind bevorzugte Schichtsysteme Nitride, Boride und Carbide dieser Metalle, z. B. MN; MBN; oder MB₂-Schichtsysteme, wobei M bevorzugt die Metalle Ti, Zr, Hf, Nb, Ta sind.

Die Beschichtung kann eine Einzelschichtbeschichtung mit nur einem Schichtsystem, z. B. MB₂ oder ein Mehrschichtsystem, z. B. TiN - TiCN - TiC; TiN-TiCN-TiN; TiN-TiBN-TiB₂ sein.

Eine besonders effektive nach dem PACVD-Verfahren aufgebrachte Beschichtung ist eine Gradientenbeschichtung, insbesondere der Zusammensetzung MN-MBN-MB₂ der genannten Übergangsmetalle, wobei besonders bevorzugt eine Gradientenbeschichtung gewählt wird, die eine schneidenflächenseitige TiN-Zone aufweist, die ohne deutliche Grenzfläche in eine TiBN-Zone und diese wiederum ohne deutliche Grenzfläche in eine im Wesentlichen aus der stabilen Phase TiB₂ bestehende Zone übergeht. Dabei beträgt die TiN-Zone z. B. 180 nm - 220 nm, vorzugsweise 180 nm bis 200 nm, die Zwischenzone TiBN 45 nm bis 55 nm, vorzugsweise 48 nm bis 52 nm, und die außenliegende TiB-Zone 1 µm bis 3 µm, insbesondere 1,5 µm bis 2,5 µm.

Für die Durchführung des Verfahrens werden als Precursor bzw. Spendermedien vorzugsweise verwendet:
Metall-Precursor: MCl₄ (M = Ti, Zr, Hf), MCl₅, (M = Ta, Nb)
Bor-Precursor: BCl₃, B₂H₆, B₃N₃H₆, BF₃
Titan-Precursor: Ti(NR₂)₄, (R = CH₃, C₂H₅)

Das PACVD-Verfahren wird zur Beschichtung der Schneiden der Glasschneiderädchen zweckmäßigerweise bei Temperaturen zwischen 450°C und 700°C, insbesondere zwischen 500°C und 680°C durchgeführt. Bevorzugt wird das sogenannte DC-Verfahren, d. h. das mit Gleichspannung bzw. mit Gleichstromplasma betriebene PACVD-Verfahren verwendet, das zweckmäßigerweise mit gepulstem Gleichstromplasma, z. B. unipolar, vorzugsweise aber bipolar durchgeführt wird.

Bei Verwendung des PVD-Verfahrens werden insbesondere die Einzelschichtsysteme, z. B. in einer Dicke von 1 µm bis 3µm, z. B. aus TiN; TiBN; TiB₂; TiAlN oder CrN aufgebracht. Dabei werden bevorzugt auch Gradientenbeschichtungen erzeugt und zweckmäßigerweise die gleichen Precursor verwendet wie beim PACVD-Verfahren. Desgleichen ist zweckmäßig, Mehrschichtsysteme aufzubringen, die vorzugsweise die gleichen Schichtfolgen aufweisen wie sie für das PACVD-Verfahren als zweckmäßig im Rahmen der Beschreibung des PACVD-Verfahrens angegeben sind.

Als PVD-Verfahren wird vorzugsweise das Sputter-Verfahren verwendet, das vorzugsweise zwischen 180°C und 300 °C, insbesondere zwischen 200°C und 220°C durchgeführt wird.

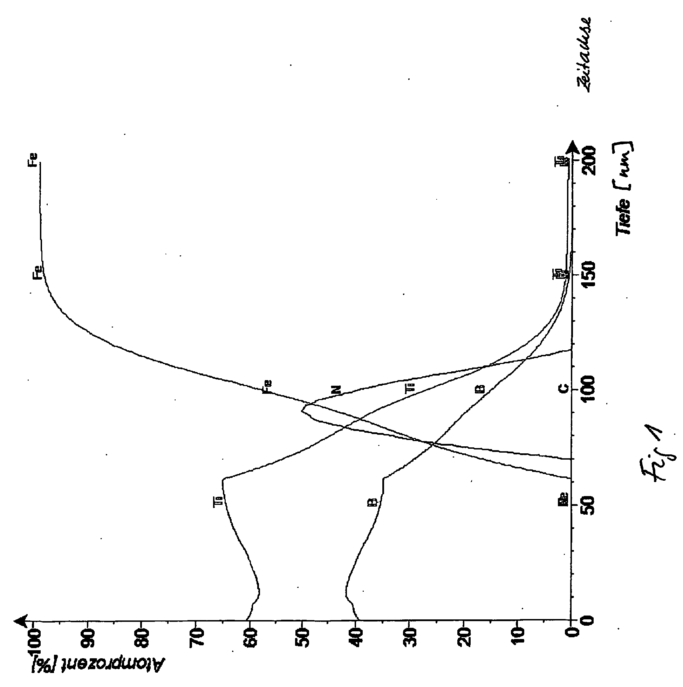

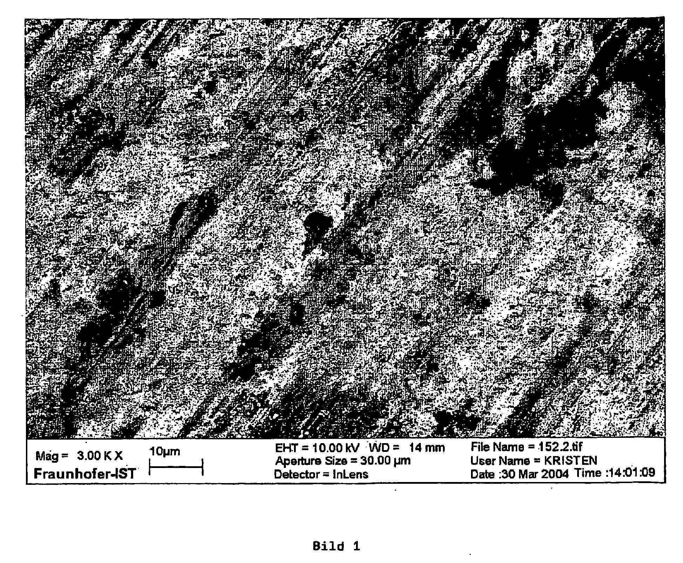

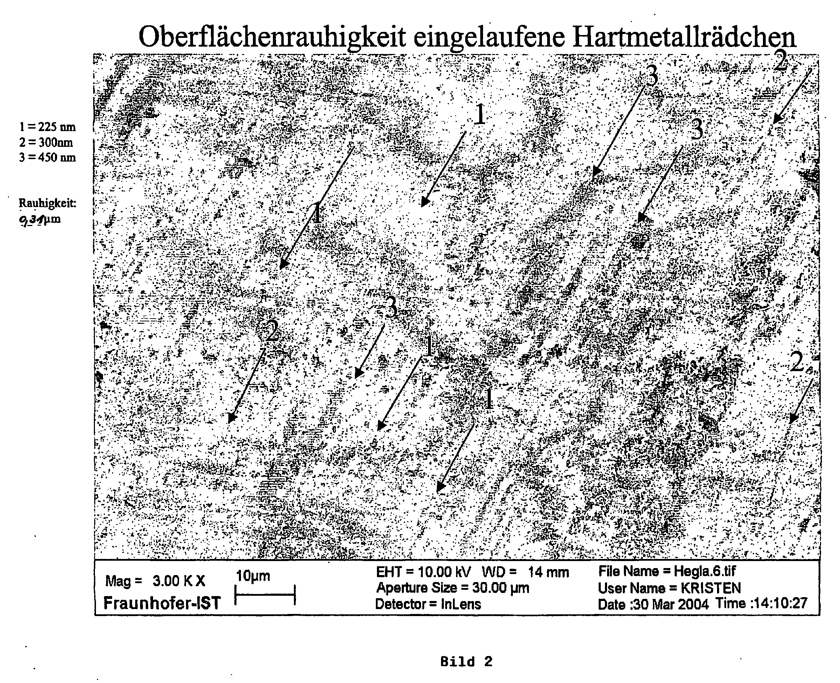

Figur 1 zeigt ein Beispiel einer Zusammensetzung einer bevorzugten Gradientenschicht, wobei auf der Ordinate die Atomprozentzahl und auf der Abszisse die Schichttiefe in nm aufgeführt sind. Man erkennt, dass bei 0 nm Tiefe bzw. an der Beschichtungsaußenoberfläche lediglich Titan und Bor vorhanden sind, was das Vorhandensein im Wesentlichen der Phase TiB₂ bedeutet, deren Anteil nach einer etwa 50 nm dicken Zone deutlich abnimmt. Im Bereich einer Zone zwischen 50 nm und 120 nm Tiefe ist der Stickstoff vorhanden, was auf die wesentliche Anwesenheit der Phase TiBN hinweist. Schließlich befindet sich im Oberflächenbereich der Schneide lediglich noch eine sehr dünne TiN-Zone. Die TiN-Zone gewährleistet eine überraschend hohe Haftfestigkeit auf der polierten Hartmetall-Oberfläche des Glasschneiderädchens im Vergleich zu anderen verwendbaren Hartwerkstoffen, weshalb insbesondere Schichtsysteme im Rahmen der Erfindung verwendet werden, die schneiderädchenseitig TiN aufweisen, wobei besonders fest das Gradientenzonensystem mit der schneiderädchenseitigen TiN-Zone auf der Schneide haftet und die Gradientenschicht mit der äußeren Titan-Borid-Zone besonders geringen Verschleiß, hohe Schnittqualität und relativ vielseitige Verwendbarkeit des Schneiderädchens bezüglich unterschiedlicher Glassorten und Glasdicken gewährleistet.

## Patentansprüche

1. Glasschneiderädchen üblicher Größenabmessungen bestehend aus Hartmetall aufweisend eine ringförmige Raumform mit einer zentralen Bohrung, sowie Seitenflächen außerhalb neben der Bohrung und eine kreisförmig am Umfang umlaufende Schneide mit keilförmig in einer Schneidenkante auslaufenden, Schleifrillen aufweisenden Schneidenflanken, wobei zumindest die Schneidenflanken der Schneide auf Rillenbreiten im Mittel unter 1 µm poliert sind und auf den polierten Schneidenflanken sowie der Schneidenkante eine Dünnschichtbeschichtung aus mindestens einem nanostrukturierten Hartmetallwerkstoff aufgebracht ist.

2. Glasschneiderädchen nach Anspruch 1,
**dadurch gekennzeichnet, dass**
auch die Schneidenkante der Schneide auf Rillenbreiten im Mittel unter 1 µm poliert ist.

3. Glasschneiderädchen nach Anspruch 1 und/oder 2,
**dadurch gekennzeichnet, dass**
die Schneidenflanken und gegebenenfalls die Schneidenkante durch Glasschneiden mit dem Glasschneiderädchen poliert sind.

4. Glasschneiderädchen nach einem oder mehreren der vorhergehenden Ansprüche,
**dadurch gekennzeichnet, dass**
das Glasschneiderädchen aus gesintertem Hartmetall besteht.

5. Glasschneiderädchen nach Anspruch 4,
**dadurch gekennzeichnet, dass**
das Glasschneiderädchen aus Wolframcarbid besteht.

6. Glasschneiderädchen nach einem oder mehreren der vorhergehenden Ansprüche,
**gekennzeichnet durch**
Polierrillenbreiten im Mittel unter 0,5 µm.

7. Glasschneiderädchen nach Anspruch 6,
**gekennzeichnet durch**
Polierrillenbreiten im Mittel unter 0,3 µm.

8. Glasschneiderädchen nach Anspruch 7,
**gekennzeichnet durch**
Polierrillenbreiten zwischen 0,3 µm und 0,1 µm.

9. Glasschneiderädchen nach einem oder mehreren der vorhergehenden Ansprüche,
**dadurch gekennzeichnet, dass**
die Schneidenflanken und die Schneidenkante entgratet sind.

10. Glasschneiderädchen nach einem oder mehreren der vorhergehenden Ansprüche,
**dadurch gekennzeichnet, dass**
die Rillenkanten abgerundet oder abgeschrägt sind.

11. Glasschneiderädchen nach einem oder mehreren der vorhergehenden Ansprüche,
**dadurch gekennzeichnet, dass**
die Beschichtung nach einem PVD- oder PACVD-Verfahren aufgebracht ist.

12. Glasschneiderädchen nach einem oder mehreren der vorhergehenden Ansprüche,
**dadurch gekennzeichnet, dass**
die Schichtdicke der Beschichtung 1 µm bis 4 µm beträgt.

13. Glasschneiderädchen nach Anspruch 12,
**dadurch gekennzeichnet, dass**
die Schichtdicke der Beschichtung 1 µm bis 3 µm, beträgt.

14. Glasschneiderädchen nach einem oder mehreren der vorhergehenden Ansprüche,
**dadurch gekennzeichnet, dass**
die Beschichtung mindestens einen Hartwerkstoff eines Übergangsmetalls (M) der IV. oder V. Gruppe des periodischen Systems aufweist.

15. Glasschneiderädchen nach Anspruch 14,
**dadurch gekennzeichnet, dass**
die Beschichtung mindestens ein Nitrid, und/oder Borid und/oder Carbid aufweist.

16. Glasschneiderädchen nach Anspruch 15,
**dadurch gekennzeichnet, dass**
die Beschichtung ein Schichtsystem MN und/oder MBN und/oder MB₂ aufweist.

17. Glasschneiderädchen nach Anspruch 16,
**dadurch gekennzeichnet, dass**
die Beschichtung eine PACVD-Beschichtung ist.

18. Glasschneiderädchen nach Anspruch 16 und/oder 17,
**dadurch gekennzeichnet, dass**
M die Metalle Ti, Zr, Hf, Nb, Ta sind.

19. Glasschneiderädchen nach einem oder mehreren der Ansprüche 16 bis 18,
**dadurch gekennzeichnet, dass**
die Beschichtung eine Einzelschichtbeschichtung ist.

20. Glasschneiderädchen nach Anspruch 19,
**dadurch gekennzeichnet, dass**
die Beschichtung eine MB₂-Schicht ist.

21. Glasschneiderädchen nach einem oder mehreren der Ansprüche 16 bis 18,
**dadurch gekennzeichnet, dass**
die Beschichtung ein Mehrschichtsystem ist.

22. Glasschneiderädchen nach Anspruch 21,
**dadurch gekennzeichnet, dass**
die Beschichtung eine Mehrschicht TiN-TiCN-TiC oder TiN-TiCN-TiN oder TiN-TiBN-TiB₂, ist.

23. Glasschneiderädchen nach einem oder mehreren der Ansprüche 16 bis 18,
**dadurch gekennzeichnet, dass**
die Beschichtung eine Gradientenbeschichtung ist.

24. Glasschneiderädchen nach Anspruch 23,
**dadurch gekennzeichnet, dass**
die Beschichtung eine Gradientenbeschichtung MN-MBN-MB2 ist.

25. Glasschneiderädchen nach Anspruch 24,
**dadurch gekennzeichnet, dass**
M bevorzugt die Metalle Ti, Zr, Hf, Nb, Ta sind.

26. Glasschneiderädchen nach einem oder mehreren der Ansprüche 23 bis 25,
**dadurch gekennzeichnet, dass**
die Gradientenbeschichtung besteht aus einer schneidenflankenseitigen TiN-Zone, einer mittleren TiBN- Zone und einer außenseitigen TiB-Zone.

27. Glasschneiderädchen nach Anspruch 26,
**dadurch gekennzeichnet, dass**
die außenseitigen TiB-Zone eine TiB₂-Zone ist.

28. Glasschneiderädchen nach Anspruch 26 und/oder 27,
**dadurch gekennzeichnet, dass**
die TiN-Zone 180 nm bis 220 nm, die TiBN-Zone 45 nm bis 55 nm und die TiB₂-Zone 1 µm - 3 µm Dicke aufweisen.

29. Glasschneiderädchen nach Anspruch 28,
**dadurch gekennzeichnet, dass**
die TiN-Zone 190 nm bis 200 nm, die TiBN-Zone 48 nm bis 52 nm und die TiB₂-Zone 1,5 µm - 2,5 µm Dicke aufweisen.

30. Glasschneiderädchen nach einem oder mehreren der Ansprüche 11 bis 19,
**dadurch gekennzeichnet, dass**
die PVD-Beschichtung als Einzelschichtsystem die Beschichtung TiN oder TiBN oder TiB₂ oder TiAlN oder CrN aufweist.

31. Verwendung eines Glasschneiderädchen nach einem oder mehreren der vorhergehenden Ansprüche in einem Schneidkopf einer Glasschneidemaschine.

32. Verfahren zur Herstellung eines Glasschneiderädchens nach einem oder mehreren der Ansprüche 1 bis 30,
**dadurch gekennzeichnet, dass**
die Rillen der Schneide eines gesinterten geschliffenen Hartmetallglasschneiderädchens auf Rillenbreiten im Mittel von unter 1 µm Breite, durch Polieren reduziert werden und anschließend die Schneide mit einem PVD- oder PACVD-Verfahren mit einem Hartmetallwerkstoff beschichtet wird.

33. Verfahren nach Anspruch 32,
**dadurch gekennzeichnet, dass**
die Rillen der Schneidenflanken auf Rillenbreiten unter 0,5 µm Breite reduziert werden.

34. Verfahren nach Anspruch 32,
**dadurch gekennzeichnet, dass**
die Rillen der Schneide zu einer Breite zwischen 0,3 µm und 0,1 µm reduziert werden.

35. Verfahren nach einem oder mehreren der Ansprüche 32 bis 34,
**dadurch gekennzeichnet, dass**
das Reduzieren unter Anwendung von Druck durchgeführt wird.

36. Verfahren nach Anspruch 35,
**dadurch gekennzeichnet, dass**
das Reduzieren unter Belastungen auf das Schneiderädchen zwischen 10 kg und 30 kg durchgeführt wird.

37. Verfahren nach Anspruch 36,
**dadurch gekennzeichnet, dass**
das Reduzieren unter Belastungen auf das Schneiderädchen zwischen 15 kg und 25 kg durchgeführt wird.

38. Verfahren nach einem oder mehreren der Ansprüche 35 bis 37,
**dadurch gekennzeichnet, dass**
das Reduzieren in einer Glasschneidemaschine durch Glasschneiden mit dem Glasschneiderädchen durchgeführt wird.

39. Verfahren nach Anspruch 38,
**dadurch gekennzeichnet, dass**
beim Reduzieren in der Glasschneidemaschine Schneidöl verwendet wird.

40. Verfahren nach einem oder mehreren der Ansprüche 32 bis 36,
**dadurch gekennzeichnet, dass**
bis zu 4 µm Dicke beschichtet wird.

41. Verfahren nach Anspruch 40,
**dadurch gekennzeichnet, dass**
bis zu 3 µm Dicke beschichtet wird.

42. Verfahren nach einem oder mehreren der Ansprüche 32 bis 41,
**dadurch gekennzeichnet, dass**
Nitride und/oder Boride und/oder Carbide der Metalle Ti, Zr, Hf, Nb, Ta aufgebracht werden.

43. Verfahren nach einem oder mehreren der Ansprüche 32 bis 42,
**dadurch gekennzeichnet, dass**
Einzelschichten aufgebracht werden.

44. Verfahren nach einem oder mehreren der Ansprüche 32 bis 42,
**dadurch gekennzeichnet, dass**
Mehrfachschichtsysteme aufgebracht werden.

45. Verfahren nach einem oder mehreren der Ansprüche 32 bis 42,
**dadurch gekennzeichnet, dass**
Gradientenschichten aufgebracht werden.

46. Verfahren nach einem oder mehreren der Ansprüche 32 bis 45,
**dadurch gekennzeichnet, dass**
als Precursor verwendet werden:
Metall-Precursor: MCl₄ (M = Ti, Zr, Hf), MCl₅ (M = Ta, Nb)
Bor-Precursor: BCl₃, B₂H₆, B₃N₃H₄, BF₃
Titan-Precursor: Ti(NR₂)₄, (R = CH₃, C₂H₅).

47. Verfahren nach einem oder mehreren der Ansprüche 32 bis 46,
**dadurch gekennzeichnet, dass**
das PACVD-Verfahren bei Temperaturen zwischen 450°C und 700°C durchgeführt wird.

48. Verfahren nach Anspruch 47,
**dadurch gekennzeichnet, dass**
das PACVD-Verfahren bei Temperaturen zwischen 500°C bis 680°C, durchgeführt wird.

49. Verfahren nach einem oder mehreren der Ansprüche 32 bis 48,
**dadurch gekennzeichnet, dass**
das PACVD-Verfahren als DC-Verfahren durchgeführt wird.

50. Verfahren nach Anspruch 49,
**dadurch gekennzeichnet, dass**
das PACVD-Verfahren als gepulstes Verfahren durchgeführt wird.

51. Verfahren nach Anspruch 50,
**dadurch gekennzeichnet, dass**
das PACVD-Verfahren als unipolares Verfahren durchgeführt wird.

52. Verfahren nach Anspruch 50,
**dadurch gekennzeichnet, dass**
das das PACVD-Verfahren als bipolares Verfahren durchgeführt wird.

53. Verfahren nach einem oder mehreren der Ansprüche 32 bis 46,
**dadurch gekennzeichnet, dass**
das PVD-Verfahren bei Temperaturen zwischen 180°C und 300°C durchgeführt wird.

54. Verfahren nach Anspruch 53,
**dadurch gekennzeichnet, dass**
das PVD-Verfahren bei Temperaturen zwischen 200°C und 220°C durchgeführt wird.

55. Verfahren nach Anspruch 53 und/oder 54,
**dadurch gekennzeichnet, dass**
das PVD-Verfahren als Sputter-Verfahren durchgeführt wird.

## Claims

1. A glass-cutting wheel of conventional size dimensions, consisting of hard metal and having an annular three-dimensional shape with a central bore, and lateral faces on the outside adjacent to the bore and a blade extending in a cirular manner on the periphery with blade flanks terminating in a blade edge in a wedge shape and having grinding channels, wherein at least the flanks of the blade are polished to channel widths of less than 1 *µ*m on average and a thin-layer coating of at least one nanostructured hard-metal material is applied to the polished blade flanks and the blade edge.

2. A glass-cutting wheel according to Claim 1, **characterized in that** the edge of the blade is also polished to channel widths of less than 1 µm on average.

3. A glass-cutting wheel according to Claim 1 and/or 2, **characterized in that** the blade flanks and optionally the blade edge are polished by glass cutting with the glass-cutting wheel.

4. A glass-cutting wheel according to one or more of the preceding claims, **characterized in that** the glass-cutting wheel consists of sintered hard metal.

5. A glass-cutting wheel according to Claim 4, **characterized in that** the glass-cutting wheel consists of tungsten carbide.

6. A glass-cutting wheel according to one or more of the preceding claims, **characterized in** by polishing-channel widths of less than 0.5 µm on average.

7. A glass-cutting wheel according to Claim 6, **characterized by** polishing-channel widths of less than 0.3 µm on average.

8. A glass-cutting wheel according to Claim 7, **characterized by** polishing-channel widths of between 0.3 µm and 0.1 µm.

9. A glass-cutting wheel according to one or more of the preceding claims, **characterized in that** the blade flanks and the blade edge are de-burred.

10. A glass-cutting wheel according to one or more of the preceding claims, **characterized in that** the channel edges are rounded or bevelled off.

11. A glass-cutting wheel according to one or more of the preceding claims, **characterized in that** the coating is applied in accordance with a PVD or PACVD method.

12. A glass-cutting wheel according to one or more of the preceding claims, **characterized in that** the layer thickness of the coating amounts to from 1 µm to 4 µm.

13. A glass-cutting wheel according to Claim 12, **characterized in that** the layer thickness of the coating amounts to from 1 µm to 3 µm.

14. A glass-cutting wheel according to one or more of the preceding claims, **characterized in that** the coating has at least one hard material of a transition metal (M) of Group 4 or 5 of the Periodic Table.

15. A glass-cutting wheel according to Claim 14, **characterized in that** the coating has at least one nitride and/or boride and/or carbide.

16. A glass-cutting wheel according to Claim 15, **characterized in that** the coating has a layer system MN and/or MBN and/or MB₂.

17. A glass-cutting wheel according to Claim 16, **characterized in that** the coating is a PACVD coating.

18. A glass-cutting wheel according to Claim 16 and/or 17, **characterized in that** M is represented by the metals Ti, Zr, Hf, Nb, Ta.

19. A glass-cutting wheel according to one or more of Claims 16 to 18, **characterized in that** the coating is a single-layer coating.

20. A glass-cutting wheel according to Claim 19, **characterized in that** the coating is an MB₂ layer.

21. A glass-cutting wheel according to one or more of Claims 16 to 18, **characterized in that** the coating is a multiple-layer system.

22. A glass-cutting wheel according to Claim 21, **characterized in that** the coating is a multiple layer TiN-TiCN-TiC or TiN-TiCN-TiN or TiN-TiBN-TiB₂.

23. A glass-cutting wheel according to one or more of Claims 16 to 18, **characterized in that** the coating is a gradient coating.

24. A glass-cutting wheel according to Claim 23, **characterized in that** the coating is a gradient coating MN-MBN-MB₂.

25. A glass-cutting wheel according to Claim 24, **characterized in that** M is preferably represented by the metals Ti, Zr, Hf, Nb, Ta.

26. A glass-cutting wheel according to one or more of Claims 23 to 25, **characterized in that** the gradient coating comprises a TiN zone on the blade-flank side, a TiBN zone in the middle and a TiB zone on the outside.

27. A glass-cutting wheel according to Claim 26, **characterized in that** the TiB zone on the outside is a TiB₂ zone.

28. A glass-cutting wheel according to Claim 26 and/or 27, **characterized in that** the TiN zone has a thickness of from 180 nm to 220nm, the TiBN zone a thickness of from 45 nm to 55 nm and the TiB₂ zone a thickness of from 1 µm to 3 µm.

29. A glass-cutting wheel according to Claim 28, **characterized in that** the TiN zone has a thickness of from 190 nm to 200 nm, the TiBN zone a thickness of from 48 nm to 52 nm and the TiB₂ zone a thickness of from 1.5 µm to 2.5 µm.

30. A glass-cutting wheel according to one or more of Claims 11 to 19, **characterized in that** the PVD coating has a single-layer system in the form of the coating TiN or TiBN or TiB₂ or TiAlN or CrN.

31. Use of a glass-cutting wheel according to one or more of the preceding claims in a cutting head of a glass-cutting machine.

32. A method of producing a glass-cutting wheel according to one or more of Claims 1 to 30, **characterized in that** the channels of the blade of a sintered, ground hard-metal glass-cutting wheel are reduced by polishing to chnnel widths of less than 1 µm in width on average, and after that the blade is coated with a hard-metal material by a PVD or PACVD method.

33. A method according to Claim 32, **characterized in that** the channels of the blade flanks are reduced to channel widths of less than 0.5 µm in width.

34. A method according to Claim 32, **characterized in that** the channels of the blade are reduced to a width of between 0.3 µm and 0.1 µm.

35. A method according to one or more of Claims 32 to 34, **characterized in that** the reduction is carried out with the application of pressure.

36. A method according to Claim 35, **characterized in that** the reduction is carried out with loads upon the glass-cutting wheel of between 10 kg and 30 kg.

37. A method according to Claim 36, **characterized in that** the reduction is carried out with loads upon the glass-cutting wheel of between 15 kg and 25 kg.

38. A method according to one or more of Claims 35 to 37, **characterized in that** the reduction is carried out by glass cutting with the glass-cutting wheel in a glass-cutting machine.

39. A method according to Claim 38, **characterized in that** cutting oil is used during the reduction in a glass-cutting machine.

40. A method according to one or more of Claims 32 to 36, **characterized in that** coating takes place with a thickness of up to 4 µm.

41. A method according to Claim 40, **characterized in that** coating takes place with a thickness of up to 3 µm.

42. A method according to one or more of Claims 32 to 41, **characterized in that** nitrides and/or borides and/or carbides of the metals Ti, Zr, Hf, Nb, Ta are applied.

43. A method according to one or more of Claims 32 to 42, **characterized in that** single layers are applied.

44. A method according to one or more of Claims 32 to 42, **characterized in that** multiple-layer systems are applied.

45. A method according to one or more of Claims 32 to 42, **characterized in that** gradient layers are applied.

46. A method according to one or more of Claims 32 to 45, **characterized in that** the precursor used is in the form of:
Metal precursor: MCl₄(M = Ti, Zr, Hf), MCl₅(M = Ta,Nb)
Boron precursor: BCl₃, B₂, H₆, B₃N₃H₄, BF₃
Titanium precursor: Ti(NR₂)₄, (R = CH₃,C₂H₅)

47. A method according to one or more of Claims 32 to 46, **characterized in that** the PACVD method is carried out at temperatures of between 450°C and 700°C.

48. A method according to Claim 47, **characterized in that** the PACVD method is carried out at temperatures of between 500°C and 680°C.

49. A method according to one or more of Claims 32 to 48, **characterized in that** the PACVD method is carried out as a DC method.

50. A method according to Claim 49, **characterized in that** the PACVD method is carried out as a pulsed method.

51. A method according to Claim 50, **characterized in that** the PACVD method is carried out as a unipolar method.

52. A method according to Claim 50, **characterized in that** the PACVD method is carried out as a bipolar method.

53. A method according to one or more of Claims 32 to 46, **characterized in that** the PVD method is carried out at temperatures of between 180°C and 300°C.

54. A method according to Claim 53, **characterized in that** the PVD method is carried out at temperatures of between 200°C and 220°C.

55. A method according to Claim 53 and/or 54, **characterized in that** the PVD method is carried out as a sputter method.

## Revendications

1. Molette de diamant de vitrier de dimensions usuelles en métal dur, présentant une forme spatiale annulaire avec un perçage central ainsi que des faces latérales externes adjacentes au perçage et un taillant qui s'étend en cercle sur sa périphérie avec des flancs de taillant effilés en forme de coin pour former une arête coupante et présentant des stries de rectification, dans laquelle les flancs du taillant au moins sont polis à des largeurs de stries en moyenne inférieures à 1 µm et un revêtement à couche mince composé d'au moins un matériau métallique dur nanostructuré est déposé sur les flancs de taillant polis ainsi que sur l'arête coupante.

2. Molette de diamant de vitrier selon la revendication 1, **caractérisée en ce que** l'arête coupante du taillant est également polie à des largeurs de stries en moyenne inférieures à 1 µm.

3. Molette de diamant de vitrier selon la revendication 1 et/ou la revendication 2, **caractérisée en ce que** les flancs de taillant et le cas échéant l'arête coupante sont polis par la découpe de verre avec la molette de diamant de vitrier.

4. Molette de diamant de vitrier selon l'une ou plusieurs des revendications précédentes, **caractérisée en ce que** la molette de diamant de vitrier est en métal dur fritté.

5. Molette de diamant de vitrier selon la revendication 4, **caractérisée en ce que** la molette de diamant de vitrier est en carbure de tungstène.

6. Molette de diamant de vitrier selon l'une ou plusieurs des revendications précédentes, **caractérisée par** des largeurs de stries de polissage en moyenne inférieures à 0,5 µm.

7. Molette de diamant de vitrier selon la revendication 6, **caractérisée par** des largeurs de stries de polissage en moyenne inférieures à 0,3 µm.

8. Molette de diamant de vitrier selon la revendication 7, **caractérisée par** des largeurs de stries de polissage allant de 0,3 µm à 0,1 µm.

9. Molette de diamant de vitrier selon l'une ou plusieurs des revendications précédentes, **caractérisée en ce que** les flancs de taillant et l'arête coupante sont ébavurés.

10. Molette de diamant de vitrier selon l'une ou plusieurs des revendications précédentes, **caractérisée en ce que** les bords des stries sont arrondis ou chanfreinés.

11. Molette de diamant de vitrier selon l'une ou plusieurs des revendications précédentes, **caractérisée en ce que** le revêtement est déposé par un procédé PVD ou PACVD.

12. Molette de diamant de vitrier selon l'une ou plusieurs des revendications précédentes, **caractérisée en ce que** l'épaisseur de couche du revêtement va de 1 µm à 4 µm.

13. Molette de diamant de vitrier selon la revendication 12, **caractérisée en ce que** l'épaisseur de couche du revêtement va de 1 µm à 3 µm.

14. Molette de diamant de vitrier selon l'une ou plusieurs des revendications précédentes, **caractérisée en ce que** le revêtement présente au moins un matériau dur à base d'un métal de transition (M) du groupe IV ou V de la classification périodique des éléments.

15. Molette de diamant de vitrier selon la revendication 14, **caractérisée en ce que** le revêtement présente au moins un nitrure et/ou un borure et/ou un carbure.

16. Molette de diamant de vitrier selon la revendication 15, **caractérisée en ce que** le revêtement présente un système de couches en MN et/ou MBN et/ou MB₂.

17. Molette de diamant de vitrier selon la revendication 16, **caractérisée en ce que** le revêtement est un revêtement par PACVD.

18. Molette de diamant de vitrier selon la revendication 16 et/ou 17, **caractérisée en ce que** M représente les métaux Ti, Zr, Hf, Nb, Ta.

19. Molette de diamant de vitrier selon l'une ou plusieurs des revendications 16 à 18, **caractérisée en ce que** le revêtement est un revêtement monocouche.

20. Molette de diamant de vitrier selon la revendication 19, **caractérisée en ce que** le revêtement est une couche de MB₂.

21. Molette de diamant de vitrier selon l'une ou plusieurs des revendications 16 à 18, **caractérisée en ce que** le revêtement est un système multicouche.

22. Molette de diamant de vitrier selon la revendication 21, **caractérisée en ce que** le revêtement est une multicouche de TiN-TiCN-TiC ou de TiN-TiCN-TiN ou de TiN-TiBN-TiB₂.

23. Molette de diamant de vitrier selon l'une ou plusieurs des revendications 16 à 18, **caractérisée en ce que** le revêtement est un revêtement à gradient.

24. Molette de diamant de vitrier selon la revendication 23, **caractérisée en ce que** le revêtement est un revêtement à gradient de MN-MBN-MB₂.

25. Molette de diamant de vitrier selon la revendication 24, **caractérisée en ce que** M représente de préférence les métaux Ti, Zr, Hf, Nb, Ta.

26. Molette de diamant de vitrier selon l'une ou plusieurs des revendications 23 à 25, **caractérisée en ce que** le revêtement à gradient se compose d'une zone en TiN du côté des flancs de taillant, d'une zone centrale en TiBN et d'une zone externe en TiB.

27. Molette de diamant de vitrier selon la revendication 26, **caractérisée en ce que** la zone externe en TiB est une zone en TiB₂.

28. Molette de diamant de vitrier selon la revendication 26 et/ou la revendication 27, **caractérisée en ce que** la zone en TiN présente une épaisseur de 180 nm à 220 nm, la zone en TiBN une épaisseur de 45 nm à 55 nm et la zone en TiB₂ une épaisseur de 1 µm à 3 µm.

29. Molette de diamant de vitrier selon la revendication 28, **caractérisée en ce que** la zone en TiN présente une épaisseur de 190 nm à 200 nm, la zone en TiBN une épaisseur de 48 nm à 52 nm et la zone en TiB₂ une épaisseur de 1,5 µm à 2,5 µm.

30. Molette de diamant de vitrier selon l'une ou plusieurs des revendications 11 à 19, **caractérisée en ce que** le revêtement par PVD sous forme de système monocouche présente le revêtement en TiN ou en TiBN ou en TiB₂ ou en TiAIN ou en CrN.

31. Utilisation d'une molette de diamant de vitrier selon l'une ou plusieurs des revendications précédentes dans une tête de coupe d'une machine de découpe de verre.

32. Procédé de fabrication d'une molette de diamant de vitrier selon l'une ou plusieurs des revendications 1 à 30, **caractérisée en ce que** les stries du taillant d'une molette de diamant de vitrier en métal dur fritté rectifié sont réduites par polissage à des largeurs de stries d'une largeur moyenne inférieure à 1 µm et ensuite le taillant est revêtu par un procédé PVD ou PACVD avec un matériau métallique dur.

33. Procédé selon la revendication 32, **caractérisé en ce que** les stries des flancs de taillant sont réduites à des largeurs de stries inférieures à 0,5 µm.

34. Procédé selon la revendication 32, **caractérisé en ce que** les stries du taillant sont réduites à une largeur allant de 0,3 µm à 0,1 µm.

35. Procédé selon l'une ou plusieurs des revendications 32 à 34, **caractérisé en ce que** la réduction se fait en appliquant une pression.

36. Procédé selon la revendication 35, **caractérisé en ce que** la réduction se fait en appliquant des charges de 10 kg à 30 kg sur la molette de coupe.

37. Procédé selon la revendication 36, **caractérisé en ce que** la réduction se fait en appliquant des charges de 15 kg à 25 kg sur la molette de coupe.

38. Procédé selon l'une ou plusieurs des revendications 35 à 37, **caractérisé en ce que** la réduction se fait dans une machine de découpe de verre en coupant du verre avec la molette de diamant de vitrier.

39. Procédé selon la revendication 38, **caractérisé en ce que** de l'huile de coupe est utilisée lors de la réduction dans la machine de découpe de verre.

40. Procédé selon l'une ou plusieurs des revendications 32 à 36, **caractérisé en ce que** le revêtement est déposé jusqu'à une épaisseur de 4 µm.

41. Procédé selon la revendication 40, **caractérisé en ce que** le revêtement est déposé jusqu'à une épaisseur de 3 µm.

42. Procédé selon l'une ou plusieurs des revendications 32 à 41, **caractérisé en ce que** l'on dépose des nitrures et/ou des borures et/ou des carbures des métaux Ti, Zr, Hf, Nb, Ta.

43. Procédé selon l'une ou plusieurs des revendications 32 à 42, **caractérisé en ce que** l'on dépose des monocouches.

44. Procédé selon l'une ou plusieurs des revendications 32 à 42, **caractérisé en ce que** l'on dépose des systèmes multicouches.

45. Procédé selon l'une ou plusieurs des revendications 32 à 42, **caractérisé en ce que** l'on dépose des couches à gradients.

46. Procédé selon l'une ou plusieurs des revendications 32 à 45, **caractérisé en ce que** l'on utilise comme précurseur :
Précurseur de métal : MCl₄ (M = Ti, Zr, Hf), MCl₅ (M = Ta, Nb)
Précurseur de bore : BCl₃, B₂H₆, B₃N₃H₄, BF₃
Précurseur de titane : Ti(NR₂)₄, (R = CH₃, C₂H₅).

47. Procédé selon l'une ou plusieurs des revendications 32 à 46, **caractérisé en ce que** le procédé PACVD se fait à des températures allant de 450°C à 700°C.

48. Procédé selon la revendication 47, **caractérisé en ce que** le procédé PACVD se fait se fait à des températures allant de 500°C à 680°C.

49. Procédé selon l'une ou plusieurs des revendications 32 à 48, **caractérisé en ce que** le procédé PACVD se fait sous la forme d'un procédé en courant continu.

50. Procédé selon la revendication 49, **caractérisé en ce que** le procédé PACVD se fait sous la forme d'un procédé pulsé.

51. Procédé selon la revendication 50, **caractérisé en ce que** 1 le procédé PACVD se fait sous la forme d'un procédé unipolaire.

52. Procédé selon la revendication 50, **caractérisé en ce que** le procédé PACVD se fait sous la forme d'un procédé bipolaire.

53. Procédé selon l'une ou plusieurs des revendications 32 à 46, **caractérisé en ce que** le procédé PVD se fait à des températures allant de 180°C à 300°C.

54. Procédé selon la revendication 53, **caractérisé en ce que** le procédé PVD se fait à des températures allant de 200°C à 220°C.

55. Procédé selon la revendication 53 et/ou la revendication 54, **caractérisé en ce que** le procédé PVD se fait sous la forme d'un procédé de métallisation cathodique.
